(19) Europäisches Patentamt
European Patent Office
Office européen des brevets

(11) Veröffentlichungsnummer : **0 190 552**
**B1**

(12) **EUROPÄISCHE PATENTSCHRIFT**

(45) Veröffentlichungstag der Patentschrift : **17.08.88**

(21) Anmeldenummer : **86100090.9**

(22) Anmeldetag : **07.01.86**

(51) Int. Cl.⁴ : **C 08 G 18/72**, C 08 F220/36, C 08 F226/02, C 09 D 3/81, C 09 D 3/72

(54) **Verfahren zur Herstellung von Pulverlackvernetzern.**

(30) Priorität : **18.01.85 DE 3501493**

(43) Veröffentlichungstag der Anmeldung : **13.08.86 Patentblatt 86/33**

(45) Bekanntmachung des Hinweises auf die Patenterteilung : **17.08.88 Patentblatt 88/33**

(84) Benannte Vertragsstaaten : **AT BE CH DE FR GB IT LI NL SE**

(56) Entgegenhaltungen :
**EP-A- 0 062 222**
**DE-A- 2 460 785**
**DE-A- 3 245 296**
**US-A- 2 718 516**

(73) Patentinhaber : **BAYER AG**
**Konzernverwaltung RP Patentabteilung**
**D-5090 Leverkusen 1 Bayerwerk (DE)**

(72) Erfinder : **Höhlein, Peter, Dr.**
**Windmühlenweg 3e**
**D-4152 Kempen 3 (DE)**
Erfinder : **Kreuder, Hans-Joachim, Dr.**
**Dörperhofstrasse 35**
**D-4150 Krefeld (DE)**

**EP 0 190 552 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von Pulverlackvernetzern mit blockierten Isocyanatgruppen, die durch radikalische Copolymerisation geeigneter Monomerer und gleichzeitiger Blockierung der Isocyanatgruppen hergestellt werden.

Pulverförmige Zweikomponenten-Überzugsmittel auf Basis von Polyhydroxylverbindungen und mit deren Hydroxylgruppen reaktionsfähigen polyfunktionellen Verbindungen (Vernetzer) finden zunehmend Eingang in großtechnische Beschichtungsverfahren zum Korrosionsschutz, z. B. bei der Lackierung von Kraftfahrzeugkarrosserieteilen. Die gebräuchlichsten Vernetzer sind blockierte Polyisocyanate, deren blockierte Isocyanatgruppen unter Einbrennbedingungen dann vernetzend wirken.

An diese Vernetzer für pulverförmige Überzugsmittel werden vielfältige Anforderungen gestellt : So erwartet man, daß sie z. B. mit Polyhydroxylverbindungen zusammen ohne zusammenzubacken lagerfähig sind. Dies ist bei den üblicherweise verwendeten Polyhydroxylverbindungen dann der Fall, wenn die Vernetzer einen Erweichungspunkt (DTA) von mindestens 50 °C aufweisen. Erwünscht sind weiterhin ein hoher Gehalt blockierter Isocyanatgruppen und unter Einbrennbedingungen hohe Reaktivität. Weiterhin sollen die Vernetzer im technischem Maßstab mit reproduzierbarer Zusammensetzung hergestellt werden können.

Außerdem wird von pulverförmigen Überzugsmitteln erwartet, daß eine Überschreitung der vorgesehenen Einbrenntemperatur oder -dauer die Überzüge möglichst wenig schädigt (« Überbrennbarkeit »).

Die Vernetzer sollten auch bei sparsamen Einsatz zu einer Vernetzung führen, die Überzüge mit gutem Eigenschaftbild (Glanz, Verlauf, Elastizität) ergibt. Während man früher empfahl, Vernetzer und Polyhydroxylkomponente in einem NCO/OH-Molverhältnis von etwa 1 : 1 einzusetzen, hat man später herausgefunden, daß auch bei sehr viel niedrigerem NCO/OH-Verhältnis (« Untervernetzung ») — sogar bei weniger als 0,7 : 1 — brauchbare Beschichtungen erhalten werden können (Firmenschrift Crelan U 12, BAYER AG, 1.9.1980).

Eine weitere Verschiebung des NCO/OH-Verhältnisses wird angestrebt, kann aber mit den bestehenden PUR-Systemen nicht durchgeführt werden.

Für den Einsatz als Beschichtungsmaterialien im bewitterungsempfindlichen Bereich werden Pulversysteme mit geringer UV-Absorptionsfähigkeit benötigt. Da die eingesetzten Polyester zum Erreichen der Rieselfähigkeit einen erheblichen Anteil an aromatischen Bestandteilen enthalten, konnte das Bewitterungsverhalten trotz des Einsatzes aliphatischer oder cycloaliphatischer PUR-Vernetzer noch nicht entscheidend verbessert werden, da der Polyesteranteil weiterhin die Hauptkomponente des PUR-Systems darstellt.

Weiterhin haftet den üblichen Polyisocyanatvernetzern der Nachteil an, daß eine gezielte Beeinflussung des Härte/Elastizitäts-Verhältnisses nur in engen Grenzen möglich ist, weil ein hohes Isocyanatäquivalentgewicht für die Entwicklung solcher Vernetzer eine angestrebte Eigenschaft darstellt, wodurch die Möglichkeiten zur Modifizierung stark eingeschränkt sind.

So wird in der DE-OS 3 112 697 ein pulverförmiges Überzugsmittel beschrieben, das aus einem Bindemittelgemisch besteht, dessen Einzelkomponenten Diole, Polyole und ein Mischpolymerisat mit verkappten Isocyanatgruppen sind. Dabei erfolgt die Herstellung des Mischpolymerisates in der Weise, daß (Meth)acrylsäureester und/oder Acrylnitril mit einem Addukt aus Vinylisocyanat und einem CH-, OH- oder NH-aciden Verkappungsmittel und gegebenenfalls weiteren copolymerisierbaren ethylenisch ungesättigten Verbindungen copolymerisiert werden.

In Org. Coat. Appl. Polym. Sci. Proc., Band 48, 185 (1983) S. 998-1002 und 1003-1007 wird der Einsatz von verkapptem Isocyanatoethylmethacrylat in Copolymeren beschrieben, die wiederum als Bindemittelkomponenten für pulverförmige Beschichtungsmaterialien eingesetzt werden können.

Die ungesättigten Isocyanate müssen also vor der Copolymerisation in einem ersten Reaktionsschritt mit dem Verkappungsmittel umgesetzt werden und erst im Anschluß daran mit den übrigen Monomeren zur Reaktion gebracht werden. Dies kann teuer, energieintensiv und umständlich sein. Darüber hinaus können Probleme mit der nachfolgenden Polymerisation in Masse oder in Lösung für die Herstellung von pulverförmigen Bindemitteln auftreten.

Es wurde nun gefunden, daß die aufgezeigten Probleme dadurch überwunden werden können, wenn die Copolymerisation in einem Reaktionsschritt in einer « Quasilösungspolymerisation » durchgeführt wird, indem das Verkappungsmittel sowohl als Reaktionsmedium für die Copolymerisation als auch als Reaktionspartner für die Isocyanatgruppen dient. So können die Nachteile einer Mehrstufenreaktion als auch der Massepolymerisation bzw. Lösungspolymerisation mit nachfolgender Lösungsmittelentfernung vermieden werden.

Gegenstand der Erfindung ist ein Verfahren zur Herstellung von Pulverlackvernetzern auf Basis von Copolymerisaten und Blockierungsmitteln, das dadurch gekennzeichnet ist, daß

I) 3 bis 90 Mol.-%, vorzugsweise 5 bis 70 Mol.-%, radikalisch polymerisierbare Isocyanate mit

II) 97 bis 10 Mol.-%, vorzugsweise 95 bis 30 Mol.-%, radikalisch polymerisierbaren Monomeren

copolymerisiert werden, wobei die Copolymerisation in Abwesenheit eines Lösungsmittels und in Gegenwart einer solchen Menge eines Blockierungsmittels für die Isocyanate durchgeführt wird, die einerseits gewährleistet, daß der Vernetzer weniger als 0,5 Gew.-% an freien Isocyanatgruppen enthält,

und die andererseits einem Äquivalentverhältnis von Blockierungsmittel zu Isocyanatgruppen von maximal 1 : 1 entspricht, mit der Maßgabe, daß die Summe der unter I) und II) genannten Prozentzahlen 100 ist und das Copolymerisat ein mittleres Molgewicht von ca. 1 000 bis 100 000, vorzugsweise von ca. 1 000 bis 50 000, und eine molekulare Uneinheitlichkeit von 0,5 bis 200 aufweist.

Als radikalisch polymerisierbare Isocyanate können grundsätzlich alle verfügbaren Monomeren eingesetzt werden.

Beispielhaft genannt seien die Acrylsäure- bzw. Methacrylsäure-Derivate monofunktioneller Isocyanate wie 2-Isocyanatoethylacrylat, 2-Isocyanatoethylmethacrylat, 3-Isocyanato-2,3-dimethyl-propylacrylat, 3-Isocyanato-2,3-dimethyl-propylmethacrylat, substituierte und unsubstituierte Vinylisocyanate oder die Umsetzungsprodukte polyfunktioneller Isocyanate mit Hydroxy(meth)-acrylaten usw.

Als Komponente (II) werden vorzugsweise Ester der Acryl- oder Methacrylsäure mit einem 1 bis 20 Kohlenstoffatome enthaltenden, gegebenenfalls ethylenisch ungesättigtem, Monoalkohol verwendet.

Als Ester der Acrylsäure und Methacrylsäure mit 1 bis 20 Kohlenstoffatome enthaltenden, gegebenenfalls ethylenisch ungesättigten, Monoalkoholen können verwendet werden : z. B. Methyl-, Ethyl-, Propyl-, Butyl-, 2-Ethylhexyl- oder Laurylacrylat oder -methacrylat ; Acrylsäure- und Methacrylsäureester mit 3 bis 20 Kohlenstoffatome enthaltenden Monoalkoholen, die Ether- oder Thioethergruppen enthalten wie z. B. Methylglykol(meth)acrylat oder Methyldiglykol(meth)acrylat.

Diese Acrylsäure- oder Methacrylsäureester können bis zu 95 Gew.-% durch eine oder mehrere weitere, damit copolymerisierbare olefinisch ungesättigte Verbindungen, die keine OH-, CH-, NH- oder SH-acide Gruppen enthalten, ersetzt sein : z. B. Acrylnitril, Methacrylnitril, Dihydrodicyclopentadienylacrylat, Vinylether wie Vinylmethylether, Vinylethylether, Vinylpropylether, Vinylisobutylether, Vinyl-2-ethylhexylether, Vinyloctadecylether, Vinylpropionat oder Vinylbenzoat, Maleinsäureanhydrid, Tetrahydrophthalsäureanhydrid, Diester der Maleinsäure, Itaconsäure, Citraconsäure oder Mesaconsäure mit gegebenenfalls Ether- oder Thioethergruppen enthaltenden Monoalkoholen mit 1 bis 20 Kohlenstoffatomen, wie z. B. Maleinsäuredimethylester, -diethylester, -dipropylester, -dibutylester, -di-2-ethylhexylester oder -dilaurylester, Crotonsäureester mit 1 bis 20 Kohlenstoffatome enthaltenden Monoalkoholen, wie Crotonsäuremethyl-, -ethyl-, -propyl-, -butyl-, -2-ethylhexyl- oder -laurylester, heterocyclische N-Vinylverbindungen wie N-Vinyl-pyrrol, N-Vinylpyrrolidin, N-Vinyl-pyrrolidon, N-Vinyl-1,2,3,4-tetrahydrochinolin, N-Vinylpiperidin, N-Vinylcaprolactam, N-Vinylcarbazol, N-Vinylimidazol, N-Vinyl-2-methylimidazol, Vinylaromaten wie Styrol, p-tert.-Butylstyrol, Vinyltoluol, α-Methylstyrol, Monoolefine mit 3 bis 20 Kohlenstoffatomen wie Propen, Buten, Penten, Hexen, Isobutylen und Diolefine wie Butadien und Isopren, sowie Acrylsäure- und Methacrylsäureester mit Monoalkoholen der allgemeinen Formel (I)

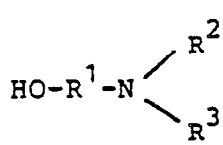

(I)

worin

$R^1 = -C_nH_{2n}-$

$R^2, R^3 = -C_nH_{2n+1}$ und

$n = 1$ bis 20, vorzugsweise 1 bis 8 bedeutet,

wie z. B. Diethylaminoethylacrylat, Dimethylaminoacrylat usw.

Bevorzugt als Komponente (II) sind (Meth-)acrylsäureester. Es können auch Mischungen der genannten Monomeren verwendet werden. Die Menge an einpolymerisierbaren ethylenisch ungesättigten Verbindungen (II) beträgt 10 bis 95, vorzugsweise 30 bis 90 Gew.-%.

Die erfindungsgemäße Herstellung der Isocyanatgruppen enthaltenden Copolymerisate kann nach üblichen Methoden, beispielsweise durch radikalisch thermische Copolymerisation, durch radikalische Redoxpolymerisation, vorzugsweise in der Schmelze, (z. B. DE-OS 32 45 298) oder durch radikalische photochemisch initiierte Copolymerisation, (z. B. DE-OS 32 45 297) erfolgen. Die Polymerisation kann bei Temperaturen von 70-200 °C, vorzugsweise 100-180 °C, durchgeführt werden. Je nach physikalischer Beschaffenheit der Monomeren bzw. der Lösungsmittel kann eine Polymerisation unter Druck notwendig werden.

Die Monomeren I und II werden im wesentlichen in den gleichen Verhältnissen wie sie zur Polymerisation eingesetzt sind, in das Copolymerisatharz eingebaut, wobei die einpolymerisierten Einheiten im wesentlichen statistisch verteilt sind.

Die Copolymerisation der Monomeren I und II wird in Abwesenheit von Lösungsmitteln und in Gegenwart des Blockierungsmittels für die Isocyanatgruppen, das in einer Menge im Reaktor vorgelegt wird, die für die vollständige Blockierung der Isocyanatgruppen ausreicht, durchgeführt. Hierunter ist eine Menge zu verstehen, die ausreichend hoch ist, um zu gewährleisten, daß der Vernetzer praktisch keine, d. h. weniger als 0,5 Gew.-% an freien Isocyanatgruppen enthält, und die andererseits einem Äquivalentverhältnis von Blockierungsmittel zu Isocyanatgruppen von maximal 1 : 1 entspricht. Auf diese Weise wird in einem Zuge die Herstellung des Copolymerisates bei gleichzeitiger Blockierung der Isocyanatfunktion erreicht.

Bevorzugte Initiatoren zur Durchführung der radikalischen Polymerisation sind z. B. aliphatische Azoverbindungen wie Azo-bis-isobuttersäurenitril, Azo-bis-2-methyl-valeronitril, 1,1'-Azo-bis-1-cyclohexannitril und 2,2'-Azo-bis-isobuttersäurealkylester ;

Diacylperoxide, wie z. B. Acetyl-, Propionyl- oder Butyrylperoxid,

Brom-, Nitro-, Methyl- oder Methoxygruppen substituierte Benzoylperoxide sowie Lauroylperoxid ;

Peroxydicarbonate, wie z. B. Diethyl-, Diisopropyl-, Dicyclohexyl- sowie Dibenzylperoxidicarbonat ;

tert.-Butylperoctoat oder tert.-Butylphenylperacetat sowie Peroxidcarbamate wie tert.-Butyl-N-(phenyl-peroxi)-carbamat oder tert.-Butyl-N-(2,3-dichlor- oder -4-chlorphenyl-peroxi) carbamat.

Weitere bevorzugte Peroxide sind : tert.-Butyl-hydroperoxid, Di-tert.-butylperoxid, Cumolhydroperoxid, Di-Cumolperoxid und tert.-Butylperpivalat.

Die Initiatoren können in Mengen von 0,2 bis 15,0 Gew.-%, bezogen auf Gesamtmonomere, eingesetzt werden. Gegebenenfalls können übliche Regler in Mengen von 0,1 bis 5 Gew.-%, bezogen auf Gesamtmonomere, bei der Polymerisation eingesetzt werden.

Die mittleren Molekulargewichte und die molekularen Uneinheitlichkeiten der Copolymerisatharze wurden mit Hilfe der Gelpermeationschromatographie (GPC) an Styragelen mit Tetrahydrofuran als Elutionsmittel bestimmt. Dabei werden nach Erstellung einer universellen Eichbeziehung (nach Z. Grubisic, P. Rempp und H. Benoit, J. Polymer Sci. Part. B, Polymer Letters 5 (1967) 753) aus der Verteilung der Chromatogramme die Molekulargewichtsmittelwerte $\overline{M}_w$ und $\overline{M}_n$ bestimmt. Die Polymerisate besitzen mittlere Molekulargewichte von $\overline{M}_n$ = 1 000-100 000, vorzugsweise $\overline{M}_n$ = 1 000-50 000, und molekulare Uneinheitlichkeiten U ($U = \overline{M}_w/M_n - 1$ ; $\overline{M}_w$ = Gewichtsmittel, $\overline{M}_n$ = Zahlenmittel des Molekulargewichts) von 0,5-200.

Als Blockierungsmittel für die Isocyanate geeignete Verbindungen sind z. B. in « Methoden der Organischen Chemie » (Houben-Weyl), Bd. 14/2, Georg Thieme Verlag, Stuttgart 1963, S. 61-70, beschrieben. Bevorzugte Blockierungsmittel sind Lactame, wie z. B. δ-Valerolactam, Pyrrolidon, Butanonoxim, Malonesterderivate, Triazole usw. insbesondere ε-Caprolactam. Aber auch andere geeignete Blockierungsmittel wie z. B. monofunktionelle Alkohole sind einsetzbar.

Die Blockierungsreaktion kann durch geeignete Katalysatoren, z. B. tertiäre Amine oder Alkaliphenolat beschleunigt werden.

Vor, während oder nach der Herstellung des die blockierten Isocyanatgruppen enthaltenden Polymerisates können Katalysatoren zugesetzt werden, die die Deblockierungs- und die Vernetzungsreaktion mit den Verbindungen, insbesondere Polyhydroxylverbindungen katalysieren, die mit dem Vernetzungsmittel zur Reaktion gebracht werden, z. B. organische Metallverbindungen, insbesondere organische Zinnverbindungen.

Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z. B. Dibutylzinnoxid, Dibutylzinndichlorid, Dibutylzinnacetat, Dibutylzinndilaurat, Dibutylzinnmaleat oder Dioctylzinndiacetat in Betracht, gegebenenfalls als Gemische. Die zugesetzten Mengen liegen im Bereich von 0,05 bis 10 Gew.-%, bezogen auf das blockierte Vernetzungsmittel.

Weitere Vertreter von zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96-102, beschrieben.

Eine besondere Ausführungsform für den Zusatz der Katalysatoren zum blockierten Vernetzungsmittel besteht in der Zugabe des Katalysators bei einer Temperatur oberhalb des Schmelzpunktes des Vernetzers, kombiniert mit der anschließenden raschen Abkühlung. In technischem Maßstab läßt sich dies vorzugsweise durch ein Zumischen während des Austragens aus dem Reaktionsgefäß verwirklichen.

Vernetzer und Katalysator lassen sich durch Mischaggregate, wie statische Mischer (z. B. Sulzer BKM-Mischer), zuverlässig ineinander verteilen. Die anschließende Kühlung kann auf vielfältige Art und Weise erfolgen, z. B. durch Überblasen eines gekühlten Inertgases oder durch Auftragen auf ein wassergekühltes Metallband.

Die erfindungsgemäß hergestellten Vernetzer können zur Härtung der unterschiedlichsten Verbindungen, vorzugsweise Polyhydroxylverbindungen, eingesetzt werden. Als solche kommen hydroxylgruppenhaltige Polyester, Polyether, Poly(meth)-acrylate, Polyurethane, Polyurethan(meth)acrylate und Vinylpolymerisate in Frage, also Polymere, wie sie z. B. in den DE-PS 1 957 483, 2 064 098, 2 105 777, 2 819 827, 2 960 366, der EP-PS 798, den US-PS 3 787 521, 3 857 818, 3 914 333, 3 919 346, 3 959 405, 3 976 719, 3 993 849, 3 998 905, 4 044 070, 4 069 275, 4 150 211, 4 211 691, und in « Methoden der Organischen Chemie » (Houben-Weyl), Bd. 14/2, Georg Thieme Verlag, Stuttgart 1963, S. 1-46, beschrieben sind.

Bevorzugte Polyhydroxylverbindungen besitzen Erweichungstemperaturen (bestimmt durch Differentialthermoanalyse) von 40-140 °C, insbesondere 45-100 °C, Hydroxylzahlen von 30-200, insbesondere 40-130, und als Zahlenmittel bestimmte Molekulargewichte von 400-20 000, insbesondere 1 000-10 000.

Besonders bevorzugte Polyhydroxylverbindungen sind Polyester, die 50-65 Gew.-% Reste aromatischer Polycarbonsäuren, 30-45 Gew.-% Reste aliphatischer Diole und 2-8, vorzugsweise ca. 5 Gew.-% aliphatischer Triole enthalten, Copolymerisate von (Meth-)Acrylsäurealkylestern und Hydroxyalkyl(meth)-acrylsäurealkylestern sowie Styrol/Maleinsäure-Copolymerisate, deren Carbonsäuregruppen mindestens teilweise mit Ethylenoxid verestert worden sind.

Zur Herstellung der gebrauchsfertigen pulverförmigen Überzugsmittel werden Polyhydroxylverbindung und erfindungsgemäß hergestellter Vernetzer gemischt und gegebenenfalls mit Pigmenten, wie z. B. Titandioxid, Verlaufsmittel, wie z. B. Polybutylacrylat oder Siliconverbindungen, und anderen üblichen Zusatzstoffen versehen und, z. B. auf Extrudern oder Knetern, bei Temperaturen von vorzugsweise 100-120 °C in der Schmelze homogenisiert. Die Mischung des Vernetzungsmittels mit den Polyhydroxylverbindungen kann auch in der Weise geschehen, daß dieselbe schon während des Herstellungsprozesses des Vernetzers vorgenommen wird, indem z. B. in Gegenwart der Polyhydroxylverbindung eine Copolymerisation der Bausteine des Vernetzers durchgeführt wird. Der erstarrte Feststoff wird gemahlen und durch Sieben von Kornanteilen oberhalb 0,1 mm befreit. Polyhydroxylverbindung und erfindungsgemäß hergestellter Vernetzer gelangen hierbei in solchen Mengenverhältnissen zum Einsatz, daß pro Hydroxylgruppe der Polyhydroxylverbindung insgesamt 0,3-1,2, vorzugsweise 0,5-1,0 (freie und blockierte) Isocyanatgruppen zur Verfügung stehen.

Die so hergestellten pulverförmigen Überzugsmittel können nach üblichem Pulverauftragsverfahren, wie z. B. elektrostatischem Pulversprühen oder Wirbelsintern, auf die zu überziehenden Formteile aufgebracht werden. Die Härtung der Überzüge kann durch Erhitzen auf Temperaturen von 130-220 °C, vorzugsweise 150-190 °C erfolgen. Bereits bei niedriger Einbrenntemperatur bzw. kurzer Einbrenndauer erhält man harte, glänzende und elastische Überzüge mit hervorragenden Korrosionsschutzeigenschaften und einer sehr guten Wärmefarbstabilität und hervorragenden Bewitterungseigenschaften.

Es sei erwähnt, daß die Verwendung der erfindungsgemäßen Vernetzer nicht allein auf die Pulverlackherstellung beschränkt sein muß. Die erfindungsgemäßen Vernetzer können selbstverständlich auch anderen Anwendungsgebieten, z. B. nach Zusatz von Lösungsmitteln zur Herstellung gelöster Einkomponentensysteme zugänglich gemacht werden.

Die in den Beispielen genannten Teile und Prozente sind, sofern nicht anders angegeben, Gewichtsteile bzw. Gewichtsprozente.

### Beispiel 1

In einem mit Rührer, Innenthermometer und Rückflußkühler ausgestatteten Polymerisationsgefäß werden unter Stickstoff 750 g (6,64 Mol) ε-Caprolactam vorgelegt und auf 170 °C erwärmt. Zum geschmolzenen Verpackungsmittel werden unter Rühren eine Monomerenmischung aus 1 065 g (6,87 Mol) Isocyanato-ethylmethacrylat, 530 g (4,14 mol) n-Butylacrylat und 535 g (5,35 mol) Methylmethacrylat und parallel dazu 120 g Di-tert.-butylperoxid über einen Zeitraum von 3 h für die Monomeren und von 4 h für den Initiator zudosiert. Nach Beendigung der Reaktion und dem Abfüllen der Harzschmelze resultiert ein festes Polymerisationsprodukt mit einer Erweichungstemperatur von 53 °C (DTA-Messung), einem freien NCO-Anteil von < 0,1 Gew.-% und einem verkappten NCO-Wert von 9,62 Gew.-%.

### Beispiel 2

Herstellung wie in Beispiel 1 beschrieben, jedoch werden als Monomere das 1 : 1-Addukt aus Hydroxyethylmethacrylat und Hexamethylendiisocyanat in einer Menge von 1 490 g (5 Mol), 545 g (4,26 Mol) Butylacrylat und 280 g (2,8 Mol) Methylmethacrylat zu 565 g (5 Mol) ε-Caprolactam bei 170 °C gleichzeitig mit 120 g Di-tert.-butylperoxid zudosiert. Nach dem Austragen und Abkühlen des Produktes resultiert ein Vernetzer mit einem DTA-Erweichungspunkt von 58 °C, einem freien Isocyanatgehalt < 0,1 Gew.-% und einem verkappten Isocyanatwert von 7,0 Gew.-%.

### Beispiel 3

Herstellung wie in Beispiel 1 beschrieben, jedoch werden als Monomere das 1 : 1 Addukt aus Hydroxyethylmethacrylat und Toluylen-2,4-diisocyanat in einer Menge von 912 g (3 Mol), 615 g (4,8 Mol) Butylacrylat und 1 020 g (10,2 Mol) Methylmethacrylat zu 333 g (2,95 Mol) ε-Caprolactam bei 170 °C gleichzeitig mit 120 g Di-tert.-butylperoxid zudosiert. Nach dem Austragen und Abkühlen des Produktes resultiert ein Vernetzer mit einem DTA-Erweichungspunkt von 62 °C, einem freien Isocyanatanteil < 0,1 Gew.-% und einem verkappten Isocyanatwert von 4,2 Gew.-%.

## Patentansprüche

1. Verfahren zur Herstellung von Pulverlackvernetzern auf Basis von Copolymerisaten und Blockierungsmitteln, dadurch gekennzeichnet, daß

I) 3 bis 90 Mol.-%, vorzugsweise 5 bis 70 Mol.-%, radikalisch polymerisierbare Isocyanate mit

II) 97 bis 10 Mol.-%, vorzugsweise 95 bis 30 Mol.-%, radikalisch polymerisierbaren, keine OH-, CH-, NH- oder SH-acide Gruppen enthaltenden Monomeren

copolymerisiert werden, wobei die Copolymerisation in Abwesenheit eines Lösungsmittels und in Gegenwart einer solchen Menge eines Blockierungsmittels für die Isocyanate durchgeführt wird, die einerseits gewährleistet, daß der Vernetzer weniger als 0,5 Gew.-% an freien Isocyanatgruppen enthält,

und die andererseits einem Äquivalentverhältnis von Blockierungsmittel zu Isocyanatgruppen von maximal 1 : 1 entspricht, mit der Maßgabe, daß die Summe der unter I) und II) genannten Prozentzahlen 100 ist und das Copolymerisat ein mittleres Molgewicht von ca. 1 000 bis 100 000 und eine molekulare Uneinheitlichkeit von 0,5 bis 200 aufweist.

2. Verfahren nach Anspruch 1, dadurch gekennzeichnet, daß als Komponente II Ester der Acryl- oder Methacrylsäure mit einem gegebenenfalls ungesättigten 1 bis 20 C-Atomen enthaltenden Monoalkohol verwendet werden.

**Claims**

1. A process for the production of powder lacquer crosslinkers based on copolymers and blocking agents, characterized in that

I) 3 to 90 mol-% and preferably 5 to 70 mol-% of radically polymerizable isocyanates are copolymerized with

II) 97 to 10 mol-% and preferably 95 to 30 mol-% of radically polymerizable monomers which do not contain any OH-, CH-, NH- or SH-acid groups,

the copolymerization being carried out in the absence of a solvent and in the presence of a blocking agent for the isocyanates in a quantity which, on the one hand, guarantees that the crosslinker contains less than 0.5 % by weight of free isocyanate groups and which, on the other hand, corresponds to an equivalent ratio of blocking agent to isocyanate groups of at most 1 : 1, with the proviso that the sum of the percentages mentioned under I) and II) is 100 and the copolymer has an average molecular weight of approximately 1,000 to 100,000 and a molecular weight non-uniformity of 0.5 to 200.

2. A process as claimed in claim 1, characterized in that esters of acrylic acid or methacrylic acid with an optionally unsaturated $C_1$-$C_{20}$ monoalcohol are used as component II.

**Revendications**

1. Procédé de préparation d'agents réticulants à base de copolymères et d'agents bloquants pour produits de revêtement en poudre, caractérisé en ce que l'on copolymérise :

I) 3 à 90 moles%, de préférence 5 à 70 moles% d'isocyanates aptes à une polymérisation radicalaire avec

II) 97 à 10 moles%, de préférence 95 à 30 moles%, de monomères aptes à une polymérisation radicalaire, ne contenant pas de groupes OH, CH, NH ou SH acides,

la copolymérisation étant effectuée en l'absence de solvant et en présence d'un agent bloquant des isocyanates en quantité qui, d'une part, assure que l'agent réticulant contient moins de 0,5 % en poids de groupes isocyanate libres et d'autre part correspond à un rapport maximal de 1 : 1 entre les équivalents de l'agent bloquant et les groupes isocyanate, étant spécifié que la somme des pourcentages indiqués sous I) et II) est égale à 100 et que le copolymère présente un poids moléculaire moyen d'environ 1 000 à 100 000 et une hétérogénéité moléculaire de 0,5 à 200.

2. Procédé selon la revendication 1, caractérisé en ce que l'on utilise en tant que composants II) des esters de l'acide acrylique ou méthacrylique et d'un monoalcool éventuellement insaturé contenant 1 à 20 atomes de carbone.